(19) **Europäisches Patentamt**

**European Patent Office**

**Office européen des brevets**

(11) Numéro de publication: **0 219 433**
**B1**

## FASCICULE DE BREVET EUROPEEN

(45) Date de publication du fascicule du brevet:
**27.09.89**

(51) Int. Cl.⁴: **C 03 B 37/04**

(21) Numéro de dépôt: **86402250.4**

(22) Date de dépôt: **10.10.86**

(54) Procédé et dispositif de fabrication de fibres en matières thermoplastiques en particulier de fibres de verre.

(30) Priorité: **10.10.85 DE 3536137**

(43) Date de publication de la demande:
**22.04.87 Bulletin 87/17**

(45) Mention de la délivrance du brevet:
**27.09.89 Bulletin 89/39**

(84) Etats contractants désignés:
**AT BE CH DE FR GB GR IT LI LU NL SE**

(56) Documents cités:
**US-A- 4 392 879**

(73) Titulaire: **ISOVER SAINT-GOBAIN, Les Miroirs 18, avenue d'Alsace, F-92400 Courbevoie (FR)**

(72) Inventeur: **Gärtner, Hans, Ringstrasse 21, D-6701 Dannstadt-Schauernheim 2 (DE)**
Inventeur: **Schulz, Dietrich, Hilgundstrasse 36, D-6700 Ludwigshafen (DE)**

(74) Mandataire: **Leconte, Jean-Gérard et al, Saint-Gobain Recherche 39, Quai Lucien Lefranc, F-93304 Aubervilliers Cedex (FR)**

## Description

La présente invention concerne un procédé et un dispositif de fabrication de fibres en matières thermoplastiques, en particulier de fibres de verre.

Selon un procédé bien connu, décrit notamment dans le brevet de la République Fédérale Allemande DE 2 849 357, des fibres en matières thermoplastiques — notamment en verre — sont produites par expulsion radiale de la matière à l'état fondu par des orifices de sortie d'une assiette centrifugeuse. Les filets de matière fondue sont étirés pour former des fibres par un courant gazeux annulaire ef forment un tore. Les fibres sont entraînées par le courant gazeux d'étirage et se déposent sur un convoyeur de réception. Dans la mise en œuvre de ce procédé, on recherche plus particulièrement une qualité constante des produits fibreux fabriqués et une maîtrise des frais de fabrication. Comme le procédé s'exécute à des températures relativement élevées, le dispositif de production des fibres, notamment l'assiette centrifugeuse, est soumis à des fortes contraintes qui se répercutent sur sa longévité. De plus, en cours de fonctionnement il arrive que la paroi périphérique de l'assiette centrifugeuse se déjette vers l'extérieur et parvienne ainsi dans le flux des gaz d'étirage chauds, de sorte que la zone déjetée de la paroi périphérique est alors exposée à une charge thermique particulièrement intense.

De plus, lorsqu'on arrête la production par interruption de l'amenée de la matière fondue jusqu'à la centrifugation, grâce à l'interposition sur le trajet de la matière fondue d'une goulotte frittée, l'effet de refroidissement de la matière fondue n'est plus fourni et l'assiette centrifugeuse est alors exposée à des courants gazeux à plus de 1400°C, température qui peut aboutir à une surchauffe nuisible de l'assiette centrifugeuse si la température des courants gazeux n'est pas réduite en temps opportun. Il est certes possible dans un tel cas d'arrêt de production de mesurer, à l'aide d'un pyromètre manuel, la température au niveau de la paroi périphérique de l'assiette centrifugeuse et de réduire en conséquence, également de façon manuelle, la température des gaz mais ceci est une démarche peu satisfaisante qui de plus n'exclut pas les chocs thermiques dus à une surchauffe ou un refroidissement localisés de l'assiette centrifugeuse.

Il est aussi connu de déterminer la température des gaz d'étirage à l'aide d'un élément thermoélectrique installé dans la chambre de combustion du mélange air-combustible. Cet élément n'indique cependant qu'une température de référence, non proportionnelle à la température de l'assiette centrifugeuse et qui dès lors se prête mal à une régulation de la température de l'assiette centrifugeuse.

Il est enfin connu de brevet US 4 392 897 de procéder à la mesure de la température de l'assiette centrifugeuse aux moyens de thermocouples, les signaux étant reçus par une antenne fixe entourant un émetteur solidaire de l'ensemble en rotation. La température mesurée sert à la régulation du brûleur générant les gaz d'étirage. Toutefois un tel dispositif est extrêmement fragile et ne permet que des mesures ponctuelles sont garantie la localisation d'une surchauffe se produisant en un point non équipé d'un termocouple. Il est aussi précisé dans US-A-4 392 879 que les pyromètres optiques ont été utilisés mais selon ce document ils ne donnent pas de bons résultats.

L'invention a pour but un procédé de production par centrifugation de fibres en matières thermoplastiques tel que la température de l'assiette centrifugeuse soit automatique régulée, étant entendu qu'en aucun état de fonctionnement, même lors de la mise en/ou hors service, l'assiette ne doit être en surchauffe et que l'on doit garantir une augmentation ou une diminution uniforme de la température de l'assiette centrifugeuse.

Conformément à la revendication principale, ce but est atteint par le fait que la température de la paroi périphérique de l'assiette centrifugeuse est mesurée par une détection du rayonnement émis par la surface de la péroi périphérique de l'assiette centrifugeuse de façon continue, la zone de mesure étant déplacée dans un mouvement continu de va-et-vient sur toute la hauteur de la paroi périphérique de façon à déterminer la température naximale de l'assiette centrifugeuse et utilisée comme valeur effective dans un circuit de régulation des gaz d'étirage en vue de la conduite du processus.

Comme l'émission de rayonnement provenant de la zone de l'assiette centrifugeuse est détectée en vue de la mesure continue de la température et en vue de son utilisation en tant que valeur effective dans le circuit de régulation, on détermine automatiquement, à titre de température effective la température de l'assiette centrifugeuse dont dépend effectivement la commande du processus. De plus, la surveillance continue de la température de la paroi périphérique de l'assiette centrifugeuse offre, même lorsque le dispositif de production de fibres opère sans alimentation de matière fondue, donc en standby, une protection absolue contre la surchauffe. En effet, dans le cas d'un dépassement d'une valeur limite déterminée, dès la production des gaz d'étirage, le volume d'iar est accru et le volume de combustible est diminué, de sorte que leur température peut être abaissée en fonction directe de la température superficielle de l'assiette centrifugeuse. Dans une large mesure, on évite ainsi automatiquement une déformation de l'assiette centrifugeuse. De plus, pour une mise en/ou hors service du dispositif de production de fibres, on peut utiliser une commande programmée qui effectue les interventions de réglage et de régulation nécessaires en correspondance avec la température mesurée de l'assiette centrifugeuse. Certes, la température superificielle de la paroi périphérique de l'assiette centrifugeuse a déjà été mesurée manuellement et régulièrement au moyen de pyromètres transportables pour détecter une éventuelle menace de surchauffe de l'assiette centrifugeuse, avec un réajustement correspondant de la valeur de consigne de la température de référence des gaz d'étirage, mais il n'avait pas été envisagé de procéder à la détection continue de l'émission du rayonnement de l'assiette centrifugeuse et de l'utiliser comme valeur instantanée pour la régulation de la température des gaz d'étirage.

De préférence, la détection de l'émission du rayonnement est effectuée dans une zone très localisée, dont la hauteur est inférieure à la hauteur de la paroi périphérique de l'assiette centrifugeuse. Il est ainsi possible d'analyser sélectivement différentes bandes de l'assiette centrifugeuse, par exemple la bande longitudinale la plus haute de la paroi périphérique de l'assiette centrifugeuse que l'expérience a révélé être plus fréquemment soumise à la surchauffe. De ce fait, on ne détermine pas uniquement une température moyenne d'un domaine superficiel étendu sur toute la hauteur de la paroi périphérique et l'émission de rayonnement produite par l'endroit le plus chaud — et donc la température de cet endroit— ne sont pas masquées par une émission moins intense d'endroits plus froids mesurés simultanément. Dans le cas d'une telle détection dans une zone très localisée, la zone visée est de préférence déplacée de façon continue et sur toute la hauteur de la paroi périphérique. Ainsi toutes les zones de la paroi périphérique sont soumises à la détection mais séquentiellement, l'une après l'autre, et il est possible de déterminer et d'évaluer la température maximale qui apparaît dans ces conditions. Avantageusement, la valeur maximale de l'assiette centrifugeuse est utilisée comme grandeur de régulation des volumes respectifs d'air et de gaz combustible produisant le courant gazeux annulaire d'étirage.

L'invention a trait également à un dispositif adéquat de réglage automatique de la température superficielle de l'assiette centrifugeuse qui comporte, à côté de l'assiette centrifugeuse au moins un pyromètre à rayonnement, fixe, qui analyse de manière continue la zone de la paroi périphérique de l'assiette centrifugeuse et mesure de préférence l'émission de rayonnement située aux environs de la zone de transition de la lumière visible à la lumière infrarouge et dans le domaine proche de l'infrarouge. Dans le cas des températures ici rencontrées, on obtient dans un domaine spectral compris entre environ 0,6 et 1,1 micron, une émission de rayonnement d'intensité et de puissance relativement élevées, le signal de mesure ainsi produit est exempt de grandeur perturbatrice. De plus, on dispose pour ce domaine spectral de détecteurs peu onéreux ayant en substance la forme d'éléments photoélectriques au silicium.

On utilise de préférence un pyromètre à rayonnement muni d'une mémoire de maximum et d'une optique pivotante, cette technique étant connue pour détecter la température de fils oscillants, de joints soudés, de pièces mal guidées, de pièces de fonderie calaminées et de lingots à laminer, etc....., toutes pièces pour lesquelles l'objet à mesurer dérive également continuellement hors de la zone de mesure. La mémoire de maximum n'enregistre pour chaque mouvement de pivotement que la valeur maximale qui est affichée pour être utilisée, dans le cas d'objets à mesurer qui dérivent, pour détecter principalement l'objet à mesurer comme tel. Suivant l'invention, la valeur maximale est utilisée pour détecter l'endroit le plus chaud de la paroi périphérique et orienter la mesure vers celui-ci.

La présente invention permet d'obtenir dans l'ensemble une régulation optimale de la température de l'assiette centrifugeuse et une automatisation du processus de production de fibres, étant entendu que sont ainsi simultanément évitées et une surchauffe nuisible et une variation de la température génératrice de chocs thermiques subis par l'assiette centrifugeuse, dont la longévité est ainsi favorablement influencée.

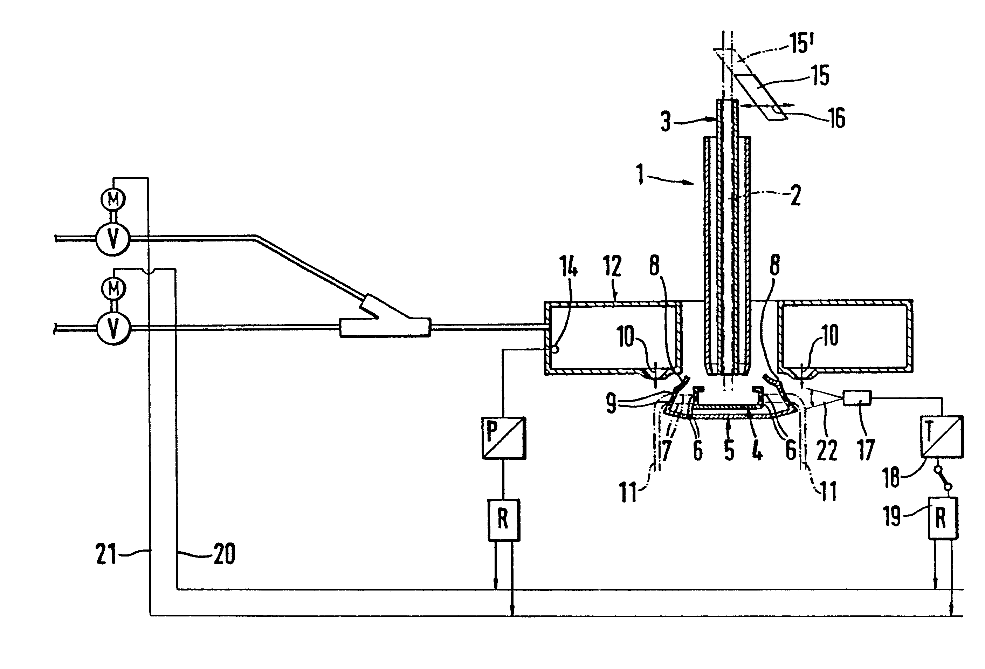

D'autres détails, particularités et avantages de l'invention ressortiront de la description suivante d'un exemple de réalisation de l'invention, faite en référence au dessin annexé.

Sur celui-ci, la référence 1 désigne schématiquement un dispositif de production de fibres dans lequel un filet fondu 2 tombe à travers un arbre creux 3 dans un panier 4 d'une assiette centrifugeuse 5. Le panier 4 présente dans sa périphérie des orifices pour la matière fondue de débit 6 relativement grands. La matière fondue est envoyée sous forme de jets radiaux relativement gros 7 sur la face interne d'une paroi périphérique 8 de l'assiette centrifugeuse 5 et traverse en cet endroit de fins orifices de sortie 9 à partir desquels s'effectue une centrifugation initialement radiale. Dès qu'ils sont sortis des orifices de sortie 9, les fins filets de matière fondue sont interceptés par un courant gazeux annulaire 10 à haute température et à grande vitesse, orienté vers le bas comme indiqué par des flèches. Le courant gazeux annulaire 10 entoure la paroi périphérique 8 et produit un tore de matière fondue 11 dans la zone initiale duquel les fins filets fondus provenant des orifices de sortie 9 sont étirés en des fibres d'une finesse souhaitée qui en aval se refroidissent et se solidifient.

Il est prévu une chambre de combustion annulaire 12 dans laquelle, par la combustion d'un mélange de gaz combustible et d'air, le courant gazeux annulaire 10 est produit avec une certaine température et une certaine pression, qui est mesurée au moyen d'un capteur de pression 14 pendant toute la durée de l'opération de production des fibres. Lors d'un accroissement de l'alimentation de gaz combustible par rapport à celle de l'air comburant, le courant gazeux annulaire 10 acquiert une température plus élevée. Au contraire, lors d'un accroissement de l'alimentation d'air comburant, le courant gazeux annulaire 10 subit une diminution de température.

Pour interrompre le jet de matière fondue 2 sortant de manière continue d'un distributeur ici non représenté, il est prévu une goulotte frittée 15 pouvant être engagée dans le sens de la double flèche 16 dans le jet de matière fondue 2 illustré en traits de chaînette en 15'. La goulotte frittée 15 recueille et dérive alors le jet avant son entrée dans l'arbre creux 3. Une telle procédure est utilisée, par exemple en cas d'une interruption de fonctionnement. L'assiette centrifugeuse 5 ne reçoit alors brusquement plus de matière fondue qui en quelque sorte le refroidissait, ce qui crée un fort risque d'une surchauffe de l'assiette centrifugeuse 5.

La température de l'assiette centrifugeuse — à partir de laquelle on effectue la régulation de la température de l'assiette par le courant gazeux annulaire 10 produit par la chambre de combustion 12, est détectée par un pyromètre à rayonnement 17 qui agit, par l'intermédiaire d'un convertisseur de mesure 18 comportant une mémoire de maximum, sur un régulateur 19 raccordé à une conduite de gaz 20 et à une conduite d'air 21. La sensibilité du pyromètre à rayonnement 17 se situe dans le domaine proche de l'infrarouge entre environ 0,6 et 1,1 micron. Le domaine spectral utile pour la mesure pouvant être compris entre 0,6 micron, soit à la limite de la lumière visible, et 1,1 micron soit à la limite proche du domaine de l'infrarouge.

Le pyromètre à rayonnement 17 est en outre pourvu d'une optique pivotante 22 qui produit une tache de mesure d'environ 13 mm de diamètre animée d'un mouvement de va-et-vient de haut en bas soit en substance sur toute la hauteur de la paroi périphérique 8 de l'assiette centrifugeuse 5. L'analyse ou le balayage de la hauteur totale de la paroi périphérique 8 de l'assiette centrifugeuse 5 s'effectue de cette façon plusieurs fois par seconde. L'optique est, dans ce cas, montée à une distance d'environ un peu plus d'un mètre de la paroi périphérique 8 de l'assiette centrifugeuse.

Le convertisseur de mesure 18, connecté au pyromètre à rayonnement 17, est équipé, comme mentionné plus haute, d'une mémoire de maximum. Ainsi, le signal utile d'un mouvement de balayage est simplement le signal de l'endroit le plus chaud détecté et sa température est transmise au régulateur 19, tandis que des endroits plus froids sont négligés. De cette façon, on oriente la détection de la température vers la température moyenne la plus haute des parties de surface balayées par la tache de mesure et on évite que la température moyenne ne porte sur une surface trop étendue et ne fournisse que des données extrêmement indirectes et imprécises. Pour la protection contre la surchauffe de l'assiette centrifugeuse 5, seul l'endroit le plus chaud entre naturellement en ligne de compte.

La possibilité de la détection continue de la température au niveau de la paroi périphérique 8 de l'assiette centrifugeuse 5 est à la base d'une automatisation de la production de fibres 1.

Dans le cas d'une mise en service du dispositif de production de fibres 1, la chambre de combustion 12 est tout d'abord balayée au moyen d'air, puis on commence l'alimentation en gaz comburant, dans une proportion prédéterminée jusqu'à ce qu'un mélange de gaz et d'air détonant soit présent. Le mélange de gaz et d'air est alors enflammé, ce qui entraîne une augmentation de pression dans la chambre de combustion 12 et le courant gazeux annulaire 10 sort de cette chambre alors que simultanément l'assiette centrifugeuse 5 tourne à vitesse élevée. Dès que la paroi périphérique 8 de l'assiette centrifugeuse 5 atteint par exemple une température de 670°C, le pyromètre à rayonnement 17 s'enclenche et prend en charge le pilotage ultérieur, de manière à optimiser la montée en température de l'assiette en fonction de l'alliage dont elle est constituée, une augmentation typiquement adéquate étant par exemple de 50°C par minute. On obtient de cette façon un accroissement correspondant du volume de gaz et d'air jusqu'à un rapport final maximum possible de, par exemple, 1:12. Jusqu'à ce que la température souhaitée soit atteinte, la température de l'assiette centrifugeuse est surveillée constamment par le pyromètre à rayonnement 17, de telle sorte qu'aucune surchauffe de l'assiette ne puisse se produire. Lorsque la température de l'assiette centrifugeuse 5 nécessaire pour la production de fibres a été atteinte, le processus de production de fibres proprement dit peut débuter par le fait que la goulotte frittée 15 est retirée du jet de matière fondue 2, étant entendu qu'une mise hors fonction du dispositif de production de fibres 1 s'effectue selon une séquence inverse.

## Revendications

1. Procédé de fabrication de fibres en matières thermoplastiques, en particulier de fibres de verre selon lequel la matière est expulsée radialement par des orifices de sortie (9) de l'espace intérieur d'une assiette centrifugeuse (5), les filets ainsi formés étant étirés pour former des fibres par un courant gazeux annulaire (10) à température et à vitesse élevées, la température de la paroi périphérique (8) de l'assiette centrifugeuse (5) est détectée de manière continue et est utilisée comme valeur effective dans un circuit de régulation du courant gazeux annulaire (10), caractérisé en ce qu'on effectue une mesure du rayonnement émis superficiellement par la paroi périphérique, la zone de mesure étant déplacée dans un mouvement continu de va-et-vient sur toute la hauteur de la paroi périphérique (8) de façon à déterminer la température maximale de l'assiette centrifugeuse (5).

2. Procédé selon la revendication 1, pour lequel le courant gazeux annulaire (10) est produit par la combustion dans une chambre (12) d'un mélange air-gaz combustible, caractérisé en ce que la température maximale détectée est utilisée comme grandeur de régulation pour le réglage du volume d'air et du volume de gaz combustible.

3. Dispositif pour la mise en œuvre du procédé selon l'une quelconque des revendications précédentes, caractérisé en ce qu'à côté de l'assiette centrifugeuse (5) est fixé au moins un pyromètre à rayonnement (17) qui est adapté à analyser de manière continue la zone de la paroi périphérique (8) de l'assiette centrifugeuse (5) dans un mouvement continu de va-et-vient et dont la sensibilité maximum est située de préférence dans le domaine proche de l'infrarouge entre 0,6 et 1,1 micron.

4. Dispositif selon la revendication 3, caractérisé en ce que le pyromètre à rayonnement (17) comporte une optique pivotante (22) et une mémoire de maximum.

## Patentansprüche

1. Verfahren zur Herstellung von Fasern aus thermoplastischen Werkstoffen, insbesondere von Glasfasern, bei dem der Werkstoff aus dem Innenraum eines Schleuderringes (5) durch Austrittsöffnungen (9) hindurch abgeschleudert wird, die so gebildeten Faden mittels eines Gasstromes (10) hoher Temperatur und Großer Geschwindigkeit in Fasern ausgezogen werden, und die Temperatur von der Umfangswand (8) des Schleuderringes (5) kontinuierlich erfaßt wird und als Istwert in einem Regelkreis für den Gasstrom (10) verwendet wird, dadurch gekennzeichnet, daß man die von der Umfangswand (8) des Schleuderringes (5) oberflächenseitig ausgehende Strahlungsemission erfaßt, und daß man Meßfleck ständig über die Höhe der Umfangswand (8) hin-und herbewegt, um den höchsten Temperatur des Schleuderringes (5) zu bestimmen.

2. Verfahren nach einem der Ansprüche 1, bei dem der Gasstrom (10) durch Verbrennung eines Gas-Luft-Gemisches erzeugt wird, dadurch gekennzeichnet, daß die ermittelte Temperatur des Schleuderringes (5) als Regelgröße zur Einstellung der Luftmenge als auch der Gasmenge herangezogen wird.

3. Vorrichtung zur Durchführung des Verfahrens nach einem der vorhergehenden Ansprüche, dadurch gekennzeichnet, daß neben dem Schleuderringes (5) mindestens ein Strahlungspyrometer (17) ortsfest angeordnet ist, welches zufähig ist, um den Bereich der Umfangswand (8) des Schleuderringes (5) ständig hin-und herbewegt abzutasten und dessen Empfindlichkeitsmaximum vorzugsweise im Bereich des nahen Infrarot zwischen 0,6 und 1,1 μm liegt.

4. Vorrichtung nach Anspruch 3, dadurch gekennzeichnet, daß das Strahlungspyrometer (17) eine Schwenkoptik (22) und einen Maximalwertspeicher aufweist.


**Claims**

1. A method of producing fibres from thermoplastics materials, in particular glass fibres, whereby the material is expelled radially through outlet orifices (9) form the space inside a centrifuge basket (5), the resultant filaments being drawn out to form fibres by an annular gas flow (10) of elevated temperature and velocity, the temperature of the peripheral wall (8) of the centrifuge basket (5) is detected continuously and is used as an effective value in a circuit for regulating the annular gas flow (10), characterised in that the radiation emitted at the surface by the peripheral wall is measured, the measuring zone being displaced in a continuous reciprocating motion over the entire height of the peripheral wall (8) in such a way as to determine the maximum temperature of the centrifuge basket (5).

2. A method acording to Claim 1, in which the annular gas flow (10) is produced by combustion of a combustible air-gas mixture in a chamber (12), characterised in that the maximum detected temperature is used as a control magnitude for regulating the volume of air and the volume of combustible gas.

3. An apparatus for carrying out the method according to any one of the preceding Claims, characterised in that fixed beside the centrifuge basket (5) is at least one radiation pyrometer (17) which is adapted to analyse continuously the zone of the peripheral wall ()8) of the centrifuge basket (5) with a continuous reciprocating movement, its maximum sensitivity being preferably within the range close to infra-red, between 0.6 and 1.1 microns.

4. An apparatus according to Claim 3, characterised in that the radiation pyrometer (17) comprises a pivoting optical system (22) and a maximum memory.